# EUROPÄISCHE PATENTANMELDUNG

(11) **EP 1 249 367 A2**
(43) Veröffentlichungstag der Anmeldung: **16.10.2002**
(21) Anmeldenummer: 01122276.7
(22) Anmeldetag: 18.09.2001
(51) Int. Cl.: B60R 11/02

(54) **Vorrichtung zur Aufnahme und zum Ausrichten eines Fernsehgerätes im Inneren eines Kraftfahrzeuges**

(30) Priorität: 10.04.2001 IT MI010758
(71) Anmelder: SEA Società Europea Autocaravan S.p.A., 20080 Zibido S. Giacomo (IT)
(72) Erfinder: Savoia, Vittorio, 20080 Casarile (IT)
(74) Vertreter: Mayer, Hans Benno, Dipl.-Ing.

(57) **Zusammenfassung**

Vorrichtung (1) zur Aufnahme und zum Ausrichten eines Fernsehgerätes (T) im Inneren eines Kraftfahrzeuges, unter Vorsehung eines C-förmigen Bügels (2), dessen unterer Arm (4) eine drehbar angeordnete Lagerplatte (7) aufnimmt, welche das Fernsehgerät trägt und der obere Arm des Bügels mit Laufrollen (11) ausgerüstet ist, die entlang einer Führungsschiene (18) eines Profils (15) abrollen, das den Raum des Kraftfahrzeuges in der Nähe der Decke (21) durchquert.

## Beschreibung

Die vorstehende Erfindung betrifft eine Vorrichtung für die Aufnahme und das Ausrichten eines Fernsehgerätes im Inneren eines Kraftfahrzeuges, insbesondere im Innenraum eines Fahrzeuges, wie Wohnmobil oder Wohnwagen, Boot oder Luftfahrzeugen.

Es ist vom Stand der Technik her bekannt geworden, dass Fahrzeuge der eingangs genannten Art auch Einrichtungen für den Anschluss eines Fernsehgerätes aufweisen.

Üblicherweise ist das Fernsehgerät in diesen Fahrzeugen im Inneren eines kleinen Schrankes angeordnet, der im Innenraum des Fahrzeuges angeordnet ist.

Bei einer derartigen Unterbringung des Fernsehgerätes wird das Gerät auf einer vorhandenen Ebene angeordnet, um den Einsatz des Fernsehgerätes zu ermöglichen.

Das Aufbauen eines Fernsehgerätes sowie das Verstauen des Gerätes z.B. im Inneren eines kleinen Schrankes, stellen umständliche Massnahmen dar. Ferner sind die vorhandenen Auflageebenen, auf denen das Fernsehgerät im Fahrzeug aufgestellt werden kann, keine optimalen Lösungen hinsichtlich des Einsatzes und der Betrachtung des Fernsehbildes, besonders, wenn man berücksichtigt, dass die Möblierung, wie z.B. die Anordnung von Betten und

Sitzflächen in den genannten Fahrzeugen unter maximaler Ausnutzung des zur Verfügung stehenden Platzes, erfolgt. Dies beeinträchtigt eine ungehinderte Betrachtung des Bildschirmes des Fernsehgerätes für alle Personen, die sich im Inneren des Fahrzeuges aufhalten.

Aufgabe der vorstehenden Erfindung ist es, eine Vorrichtung vorzuschlagen, die es ermöglicht, ein Fernsehgerät sicher aufzunehmen und ferner ein Verschieben des Fernsehgerätes in dessen Ruhelage ermöglicht oder ein Verschieben der Halterung sowie des Fernsehgerätes in eine Betrachtungslage und ein Ausrichten des Bildschirmes gestattet, um ein Betrachten des ausgestrahlten Fernsehprogrammes für alle sich im Innenraum des Fahrzeuges befindlichen Personen zu ermöglichen, auch, wenn die Personen Sitzflächen einnehmen, die an unterschiedlichen Orten im Inneren des Fahrzeuges angeordnet sind.

Die erfindungsgemässe Aufgabe wird unter Verwendung eines C-förmigen Bügels gelöst, wobei der untere Arm des Bügels eine drehbar angeordnete Platte aufweist, doe das Fernsehgerät aufnimmt und der obere Arm des Bügels mit Laufrollen zum Verfahren entlang eines Führungsprofiles ausgestattet ist und das Führungsprofil den Raum des Fahrzeuges in der Nähe seiner Decke durchquert.

Mit besonderem Vorteil ist die Platte zur Aufnahme des Fernsehgerätes um einen Zapfen drehbar angeordnet, wobei der Zapfen mit dem unteren Arm des Bügels fest verbunden ist.

Es hat sich ferner als vorteilhaft erwiesen, die Aufnahmeplatte mit Rändern vorzusehen, die als Haltemittel für das Fernsehgerät dienen.

In vorteilhafter Weise weist die Platte Ausnehmungen entlang parallel verlaufender Seiten auf, wobei in diese Ausnehmungen Bänder zum Festspannen des Fernsehgerätes eintreten.

Es hat sich auch als vorteilhaft erwiesen, den Arm, der die Laufrollen aufnimmt, mit einer vom Betreiber betätigbaren Bremse auszurüsten.

Der Erfindungsgegenstand wird nun genauer beschrieben und in den Zeichnungen dargestellt.

Es zeigen:
Figur 1 die Aufnahmevorrichtung in auseinandergezogener Darstellung, mit dem Bildschirm des Fernsehgerätes senkrecht ausgerichtet gegenüber einem Führungsprofil.
Figur 2 die Aufnahmevorrichtung mit dem Bildschirm des Fernsehgerätes, parallel zum Führungsprofil ausgerichtet;
Figur 3 das Führungsprofil mit dem Laufwagen im Querschnitt.

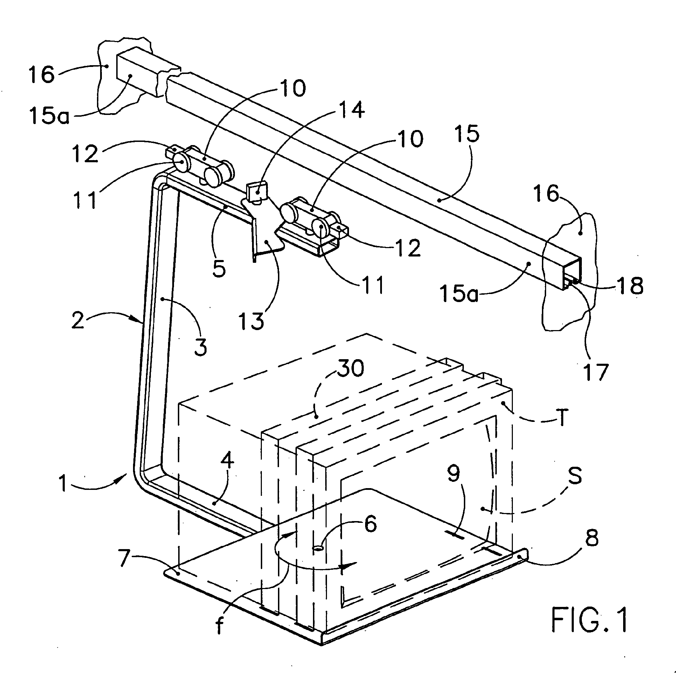

Wie der Figur 1 zu entnehmen ist, besteht die gesamthaft mit 1 gekennzeichnete Haltevorrichtung aus einem Bügel, der C-Form ausweist.

Der Bügel besteht aus einer senkrecht angordneten Strebe 3, mit der ein unterer Arm 4 sowie ein oberer Arm 5 verbunden ist.

Am freien Ende des unteren Armes 4 ist ein Drehzapfen 6 befestigt, der eine Halteplatte 7 drehbar aufnimmt.

Die Platte 7 kann um 360°, wie dies schematisch durch den Pfeil (f) dargestellt ist, gedreht werden.

Auf der Platte 7 kann ein Fernsehgerät (T) angeordnet werden.

Um zu vermeiden, dass das Fernsehgerät (T) versehentlich von der Platte 7 abrutscht, weist die Platte 7 entlang einer oder mehrerer Seiten abgebogene Ränder auf, wie dies schematisch mit dem Bezugszeichen 8 angedeutet ist.

Desweiteren weist die Platte 7 entlang zweier paralleler Seiten Ausnehmungen auf, die mit dem Bezugszeichen 9 gekennzeichnet sind.

Diese Ausnehmungen 9 werden von Riemen oder elastischen Bändern 30 durchdrungen.

Mit diesen Bändern 30 wird das Fernsehgerät in seiner Gebrauchslage gegenüber der Aufnahmeplatte 7 festgelegt.

Der Bügel 2 weist einen oberen Arm 5 auf, und dieser Arm 5 trägt Laufwagen 10, die mit Rollen oder Rädern 21 bestückt sind.

Auf den sich gegenüberliegenden Seiten weisen die Wagen 10 pufferartige Vorsprünge 12 auf, welche die Bewegung der Wagen 10 dämpfen. Die Vorsprünge 12 sind in vorteilhafter Weise aus Kunststoff oder gummiartigem Material hergestellt und dienen als kleine Prellböcke oder Dämpfungseinrichtungen.

Zwischen den Laufwagen 10 ist ein Betätigungshebel 13 vorgesehen, der verschwenkbar gegenüber einer senkrechten Achse angeordnet ist.

In Übereinstimmung mit der senkrechten Achse ist ein Arretiermittel 14 vorgesehen, das in den Kanal des Profilstückes 15 eingreift.

Die Wagen können im Inneren des Profils 15 verfahren werden. Die Enden 15a des Profiles schliessen in der Nähe der Seitenwände 16 des Fahrzeuges ab.

Mit besonderem Vorteil wird das Profil 15 fest mit den Wänden 16, z.B. unter Einsatz von Schrauben, verbunden.

Es eröffnet sich auch die Möglichkeit, das Profil 15 an der Decke des Fahrzeuges zu befestigen.

Das Profilstück 15 weist im wesentlichen C-Form auf. An der Unterseite ist eine Öffnung 17 vorgesehen, die von Laufflächen 18 begrenzt wird. Diese Laufflächen 18 nehmen die Rollen 11 der Wagen 10 auf.

In Figur 1 ist der Bildschirm (S) des Fernsehgerätes (T) senkrecht zur Erstreckung des Profiles 15 ausgerichtet und das Gerät (T) ist in seiner Lage, unter Verwendung von Rippen 30, welche die Ausnehmungen 9 durchdringen, in seiner Lage festgelegt.

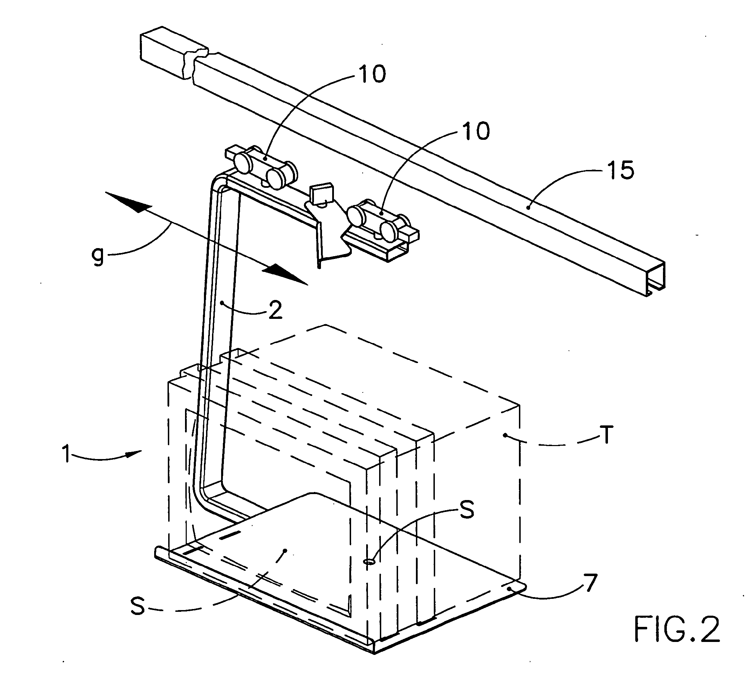

In Figur 2 wurde die Platte 7 einer Drehung von 90° um den Zapfen 6 ausgesetzt, um den Bildschirm (S) parallel zum Profil 15 auszurichten.

Selbstverständlich kann der Bildschirm (S) auch Zwischenpositionen einnehmen.

Dank der Vorsehung der Laufwagen 10 kann die gesamte Vorrichtung 1 verfahren werden, wie dies in Figur 2 durch den Pfeil (g) angedeutet ist. Dadurch ist ein Positionieren des Bügels 2 gemeinsam mit dem Fernsehgerät (T) gegenüber dem Profil 15 möglich.

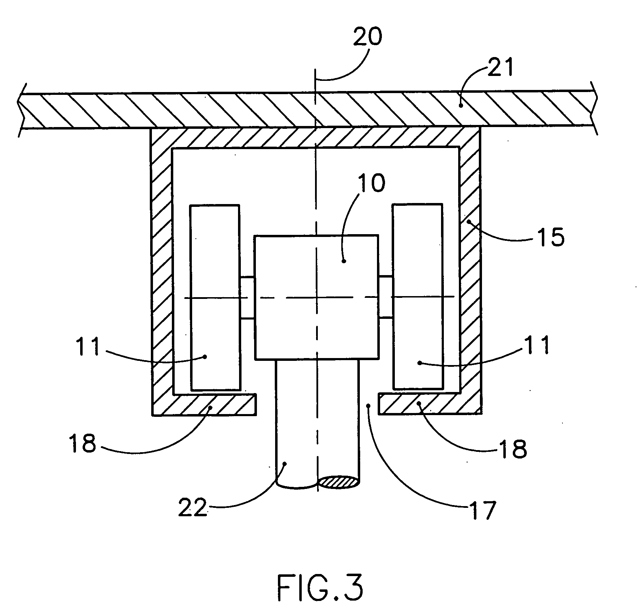

Das Profil 15 ist genauer in Figur 3 dargestellt.

Man kann entnehmen, dass das Profil 15, z.B. unter Verwendung von schematisch dargestellten Schrauben 20, an der Decke 21 des Fahrzeuges befestigt ist.

An seiner Unterseite weist das Profiul 15 horizontale Laufflächen 18 auf, welche zur Aufnahme der Rollen 11 des Wagens 10 dienen.

Durch die Ausnehmung 17 ragt ein Zapfen 22, der mit dem oberen Arm 5 des Bügels 3 verbunden ist.

Somit wird es unter Verwendung der Haltevorrichtung 1, die in den Figuren 1 und 3 dargestellt und im Vorausgehenden beschrieben wurde, ermöglicht, den Bildschirm des Fernsehgerätes in seiner Lage auszurichten, indem ein Verschwenken der Halteplatte 7 um den Drehzapfen 6 erfolgt, der am freien Ende des unteren Armes 4 des Bügeln 2 vorgesehen ist.

Dank der Vorsehung von zwei Laufwagen 10, die an den Enden des oberen Armes 5 des Bügels 2 angeordnet sind, wird eine sichere Führung der gesamten Einrichtung, bestehend aus Bügel 2, Platte 7 und Fernsehgerät (T), erreicht.

Durch Vorsehen des Profils 15, das mit seitlichen Laufflächen 18 ausgestattet ist, kann die gesamte Aufnahmevorrichtung 1 (zusammen mit dem Fernsehgerät (T)) in einer horizontalen Ebene verfahren werden, wie dies durch den Pfeil (g) in Figur 2 dargestellt ist. Ferner wird es ermöglicht, das Fernsehgerät beliebig zwischen den Seitenwänden, die den Innenraum des Fahrzeuges begrenzen, in seiner Lage anzuordnen.

Dank der Vorsehung eines Führungsprofiles 15 besteht die Möglichkeit, die Aufnahmevorrichtung 1 in unmittelbarer Nähe der Decke 21 des Fahrzeuges zu montieren.

Die Montage des Profiles 15 erfolgt in einfacher Weise unter Zuhilfenahme von Schrauben und es besteht auch die Möglichkeit, bereits bestehende Fahrzeuge mit der Aufnahmevorrichtung 1, gemäss der vorstehenden Erfindung, nachzurüsten.

Dank der Vorsehung einer Arretiervorrichtung 13, 14 besteht die Möglichkeit, die Aufnahmevorrichtung 1 in eine Ruhelage zu verfahren und in dieser Lage zu arretieren, oder aber es besteht die Möglichkeit, eine geeignete Lage für die Vorrichtung entlang der Erstreckung des Führungsprofiles 15 auszuwählen und nach gewünschter Lageanordnung des Fernsehgerätes die Vorrichtung 1 in der gewünschten Stellung festzulegen.

Im vorangegangenen Text wurde die Einrichtung zum Aufnehmen und Lageausrichten eines Fernsehgerätes für ein Kraftfahrzeug, wie z.B. ein Wohnmobil oder einen Wohnwagen beschrieben. Es ist aber naheliegend und es bestehen keine Hindernisse, die Vorrichtung zur Aufnahme und zum Ausrichten eines Fernsehgerätes auch im Inneren von Booten oder Luftfahrzeugen einzusetzen.

## Patentansprüche

1. Vorrichtung (1) zur Aufnahme und zum Ausrichten eines Fernsehgerätes (T) im Inneren eines Kraftfahrzeuges, **dadurch gekennzeichnet, dass** die Vorrichtung (1) aus einem C-förmigen Bügel (2) besteht, von dem der untere Arm (4) drehbar eine Aufnahmeplatte (7) aufnimmt, die das Fernsehgerät (T) lagert und der obere Arm (5) des Bügels (2) Laufrollen (11) aufweist, die entlang einer Fläche (18) eines Führungsprofiles (15) verfahrbar sind, wobei das Führungsprofil (15) den Innenraum des Fahrzeuges, in der Nähe der Decke (21), durchquert.

2. Vorrichtung, nach Patentanspruch 1, **dadurch gekennzeichnet, dass** die Aufnahmeplatte (7) drehbar von einem Zapfen (6) aufgenommen ist, und dieser Zapfen (6) mit dem unterem Arm (4) des Bügeln verbunden ist.

3. Vorrichtung, nach Patentanspruch 1, **dadurch gekennzeichnet, dass** die Aufnahmeplatte (7) abstehende Ränder (8) aufweisen, die Haltemittel für das Fernsehgerät (T) bilden.

4. Vorrichtung, nach Patentanspruch 1, **dadurch gekennzeichnet, dass** die Platte (7) entlang paralleler Seiten Ausnehmungen (7) zum Durchführen von Haltebändern (30) aufweist, die den Körper des Fernsehgerätes (T) umschlingen.

5. Vorrichtung, nach Patentanspruch 1, **dadurch gekennzeichnet, dass** der obere Arm (5) des Bügels (2), der die Laufwagen (10) aufnimmt, ein Arretiermittel (13, 14) trägt, welches von einer Bedienungsperson betätigbar ist.

6. Vorrichtung, nach Patentanspruch 1, **dadurch gekennzeichnet, dass** die Laufwagen (10) an ihren Aussenseiten abstehende Vorsprünge (12) aus elastischem Material aufweisen, die Prellböcke oder Dämpfungsmittel dienen.
